# EUROPÄISCHE PATENTSCHRIFT

(11) **EP 3 399 895 B1**
(45) Veröffentlichungstag und Bekanntmachung des Hinweises auf die Patenterteilung: **15.09.2021**
(21) Anmeldenummer: 16704012.0
(22) Anmeldetag: 12.02.2016
(51) Int. Cl.: A47J 43/07

(54) **VORRICHTUNG ZUM MISCHEN UND/ODER PÜRIEREN VON SPEISEN UND VERFAHREN ZUM KONTROLLIEREN DIESER VORRICHTUNG**
DEVICE FOR MIXING AND/OR PURÉEING FOOD AND METHOD FOR CONTROLLING THIS DEVICE
DISPOSITIF DESTINE A MELANGER ET/OU A REDUIRE EN PUREE DES REPAS ET SON PROCEDE DE CONTROLE

(30) Priorität: 04.01.2016 EP 16150078
(43) Veröffentlichungstag der Anmeldung: 14.11.2018
(73) Patentinhaber: Novis AG, 1840 Luxemburg (LU); Techtronic Floor Care Technology Limited, Tortola (VG)
(72) Erfinder: STEINER, Wolfgang, 2572 Mörigen (CH); LOEBIG, Jeffrey Carl, Kwai Chung, Hong Kong (HK); FELIX, Chan Chi Yan, Dongguan City, Guangdong (CN); KEVIN, Chow Wing Hung, Dongguan City, Guangdong (CN); JIEMY, Zhou Jie Guang, Dongguan City, Guangdong (CN)
(74) Vertreter: BOVARD AG
(86) Internationale Anmeldenummer: PCT/EP2016/053021
(87) Internationale Veröffentlichungsnummer: WO 2017/118492

(56) Entgegenhaltungen:
- EP-A1- 0 120 496
- EP-A1- 2 505 063
- DE-A1- 3 540 370

## Beschreibung

### Technisches Gebiet der Erfindung

Die vorliegende Erfindung bezieht sich auf das technische Gebiet von Geräten zur Be- und/oder Verarbeiten von Nahrungsmitteln. Insbesondere bezieht sich die vorliegende Erfindung auf eine Vorrichtung zum Mischen, Zerkleinern, Pürieren und/oder Temperieren von Nahrungsmitteln, beispielsweise Früchten, Gemüse, Fleisch oder Wurstwaren, die von Hand befüllt wird. Ausserdem bezieht sich die vorliegende Erfindung auf ein Verfahren zum Kontrollieren dieser Vorrichtung.

### Stand der Technik

Ein Beispiel für ein solches Gerät zur Be- und/oder Verarbeiten von Nahrungsmitteln ist etwa ein standfestes Küchengerät, welches zum Mischen, Zerkleinern, Pürieren, Raspeln, etc. von Nahrungsmitteln verwendet wird und üblicherweise als Standmixer oder (in Anlehnung auf den englischen Begriff) Blender oder Food-Processor genannt wird. Ein weiteres Beispiel ist ein Temperiergerät oder Kochgerät, das Nahrungsmittel beispielsweise erwärmt oder kühlt oder auch durch Kochen oder Garen verarbeitet. Solche Vorrichtungen existieren schon seit längerer Zeit und finden heute eine breite Verwendung im Haushalt und im professionellen gastronomischen Bereich (z.B. in Saftbars o.ä.). Insbesondere seit einiger Zeit erfreuen sich frischzubereitete Frucht- und Gemüsesäfte bzw. Smoothies einer grossen Popularität, was die Nachfrage nach solchen Küchengeräten entsprechend erhöht.

Derartige Geräte bestehen typischerweise aus einer Basis, mit welcher eine Be- oder Verarbeitungseinheit betrieben wird und in der z. B. ein Elektromotor zum Antrieb eines Schneidgeräts oder ein Heizgerät untergebracht ist. Auf diese Basis ist ein Behälter für die zu bearbeitenden Nahrungsmittel aufgesetzt, vorzugsweise abnehmbar. Am Boden des Behälters kann sich z. B. ein Messerstern befinden, welcher über eine passende Verbindung mit dem Elektromotor verbunden ist, so dass dieser in schnelle Rotation versetzt werden kann. Die Rotation des Messersterns führt zum Mischen bzw. zum Pürieren der Speisen im Behälter. Oder es kann ein Heizelement im Behälter vorgesehen sein, das über das Heizgerät in der Basis betrieben wird.

Um ein Herausspringen oder -spritzen der Speisen während des Betriebs des Geräts zu vermeiden, kann der Behälter durch einen Deckel verschlossen werden. Dabei kann der Deckel eine Öffnung des Behälters vollständig schliessen oder kleine Bereiche freilassen, um z. B. weitere Nahrungsmittel in den Behälter einzuführen oder die verarbeiteten Nahrungsmittel auszugiessen. Dieser Deckel kann z. B. vollkommen abnehmbar oder über eine Scharnierverbindung am oberen Rand des Behälters befestigt sein.

Die grundsätzliche Struktur eines herkömmlichen Standmixers geht z.B. aus der US 3 368 800 hervor.

Das Dokument DE 35 40 370 offenbart eine Sicherheitsvorrichtung für ein Küchengerät.

Damit eine gute (und auch schnelle) Zerkleinerung der Speisen in einem Standmixer erreicht werden kann, wird z. B. ein Messerstern typischerweise auf sehr hohe Geschwindigkeiten gebracht. Bei "langsameren" Standmixer werden so Drehzahlen von etwa 12'000 Umdrehungen pro Minute erreicht, während bei leistungsfähigeren Standmixern (vor allem im Gastronomiebereich) auch Geschwindigkeiten von knapp 40'000 Umdrehungen pro Minute möglich sind.

Solche Geschwindigkeiten der Messer bergen jedoch die Gefahr der ernsthaften Verletzungen, falls ein Benutzer mit der Hand ins Innere des Behälters hineinreichen und so in den rotierenden Messerstern greifen kann. Die Verletzungsgefahr ist speziell bei Kindern sehr gross, da sie sich oft der Gefahr gar nicht bewusst sind und den Standmixer für ein Spielzeug halten könnten.

Bekannte Lösungen zur Verringerung dieser Verletzungsgefahr basieren im Wesentlichen auf mechanischen Sicherheitselementen (z.B. mit einer mechanischen Verriegelung des Deckels). Allerdings sind diese Lösungen oft kompliziert oder nicht zuverlässig, so dass die Verletzungsgefahr trotzdem besteht.

Um eine zuverlässige Funktionsweise solcher Küchengeräte sicher zu stellen ist es bekannt, den Behälter mit einem Identifikationsmittel auszustatten. Im Fall von mehreren Behältern können diese mit unterschiedlichen Identifikationsmitteln versehen werden. Korrespondierend dazu ist in der Basis ein Erkennungsmittel vorgesehen, das den Behälter mittels des Identifikationsmittel registriert und z. B. ein zugehöriges Betriebsprogramm für die Bearbeitung von Nahrungsmitteln freigibt. Aus der WO 2013/186060 ist z. B. eine Heizstation zum Wärmen von Nahrungsmitteln bekannt, bei der Befestigungstifte gleichzeitig als Identifikationsmittel dienen. Weiter ist aus der WO 2015/063513 ein Verarbeitungsgerät bekannt, bei dem die Behälter mit einem RFID (radio-frequency identification) Element und die Basis mit einem dazu passenden Empfänger versehen ist. Erkennt der Empfänger ein bestimmtes RFID Element, kann ein bestimmtes Programm freigeschaltet werden.

Auch bei derartigen Küchengeräten bleibt die Gefahr bestehen, dass trotz Erkennung eines bestimmten Behälters das Behälterinnere zugänglich bleibt, während das Bearbeitungsprogramm bereits freigeschaltet ist, sodass sich eine Person an den Be- oder Verarbeitungselementen verletzen kann.

### Offenbarung der Erfindung

Es ist daher eine Aufgabe der vorliegenden Erfindung eine Vorrichtung zum Be- und/oder Verarbeiten von Nahrungsmitteln vorzuschlagen, mit einem Sicherheitssystem, welches im Vergleich zu den Sicherheitssystemen in bisher bekannten Geräten eine erhöhte Zuversichtlichkeit und einen einfacheren Aufbau aufweist, und welches zudem günstiger hergestellt und instand gesetzt werden kann. Zudem soll ein Verfahren zum Kontrollieren einer solchen Vorrichtung zum Be- und/oder Verarbeiten von Nahrungsmitteln bereitgestellt werden, dank welchem die Verletzungsgefahr bei der Verwendung dieser Vorrichtung verringert werden kann.

Diese Aufgaben werden von der Erfindung durch eine Vorrichtung gemäss dem unabhängigen Patentanspruch 1 und ein Verfahren gemäss dem unabhängigen Patentanspruch 9 gelöst. Vorteilhafte Ausgestaltungen und weitere Ausführungsbeispiele sind in den abhängigen Ansprüchen beschrieben. Eine Vorrichtung zum Be- und/oder Verarbeiten von Nahrungsmitteln nach der Erfindung umfasst einen Behälter zur Aufnahme der Nahrungsmittel mit einem Deckel, eine Basis, auf welcher der Behälter angeordnet ist, und eine Einheit zur Be- und/oder Verarbeitung der Nahrungsmittel. Der Deckel ist relativ zum Behälter beweglich. Er kann z. B. aufgeklappt oder auch vollständig abgenommen werden. Die Basis kann auch als Sockel zum Aufstellen der Vorrichtung auf einer Arbeitsfläche dienen. Vorzugsweise ist der Behälter von der Basis abnehmbar, beispielsweise um den Behälter zu reinigen oder verschiedene Behälter mit der gleichen Basis verwenden zu können. Ein Abnehmen ist jedoch nicht zwingend erforderlich. Die Einheit zur Be- und/oder Verarbeitung kann kurz als Bearbeitungseinheit bezeichnet werden. Elemente der Bearbeitungseinheit können z. B. im Behälter angeordnet sein, wie z. B. rotierende Schneidmesser, die mittels einer Kupplung an einen Antriebsmotor in der Basis angeschlossen werden können. Es kann aber auch z. B. ein Heizelement ausserhalb des Behälters, etwa in der Basis, als Bearbeitungseinheit verstanden werden.

Nach der Erfindung umfasst der Deckel einen Permanent-Magneten und der Behälter eine Blattfeder, wobei der Permanent-Magnet und die Blattfeder derart zusammenwirken, dass ein am Behälter angeordneter, vorzugsweise integrierter, elektrischer Schaltkreis schliessbar ist. Zum Schliessen des Schaltkreises sollen sie einander kontaktieren. Dies ist erfindungsgemäss dann der Fall, wenn der Deckel auf dem Behälter in eine Verschlussposition gebracht wird, in der er einen Öffnungsbereich des Behälters verschliesst oder zumindest einen Zugriff von aussen verhindert.

Weiter umfasst der Behälter ein Identifikationselement mit darauf speicherbaren Daten und die Basis umfasst ein Lese- und Kontrollmodul. Die Daten auf dem Identifikationselement umfassen zumindest eine Information, wonach der Deckel in der Verschlussposition ist und somit ein sicherer Betrieb der Vorrichtung gewährleistet ist. Zusätzliche können optional weitere Daten z. B. zur Bestimmung der Art des Behälters oder zur Anforderung bestimmter Bearbeitungsprozesse gespeichert werden. Das Identifikationselement ist bei geschlossenem Schaltkreis aktiviert, d. h. wenn der Deckel in der Verschlussposition ist. Somit ist die auf dem Identifikationselement speicherbaren Daten durch das Lese- und Kontrollmodul lesbar und die Einheit zur Be- und/oder Verarbeitung ist kontrollierbar. Zur Kontrolle übermittelt die Lese- und Kontrollmodul beispielsweise ein Signal an eine Steuereinheit, welche die Einheit zur Be- und/oder Verarbeitung steuert.

Dank einer solchen Struktur der erfindungsgemässen Vorrichtung zum Be- und/oder Verarbeiten von Nahrungsmitteln kann gewährleistet werden, dass eine Kontrolle der Einheit zur Be- und/oder Verarbeitung der Vorrichtung davon abhängig gemacht wird, ob der Deckel auf dem Behälter und vorzugsweise auch der Behälter auf der Basis korrekt aufgesetzt sind. Somit kann die Sicherheit beim Betrieb der erfindungsgemässen Vorrichtung stark erhöht werden.

Bei einer Ausführungsform einer Vorrichtung nach der Erfindung verläuft der elektrische Schaltkreis von einem Öffnungsbereich des Behälters, der mit dem Deckel abdeckbar ist, zu einem Aufsatzbereich des Behälters, mit dem der Behälter auf der Basis aufgesetzt und mit dieser gekoppelt werden kann. Ist der Behälter z. B. in Form einer Kanne ausgebildet, wie bei Küchengeräten allgemein üblich ist, liegt der Öffnungsbereich oben am Behälter und der Aufsatzbereich unten z. B. am Boden des Behälters. Somit erstreckt sich der Schaltkreis über die Länge des Behälters. Vorteilhaft ist der Schaltkreis in einem Griff des Behälters angeordnet. Ebenso kann die Blattfeder des Behälters am Griff angeordnet werden. Alternativ kann die Blattfeder an einem Bereich eines Randes eines Öffnungsbereichs des Behälters oder vollständig um den Rand des Öffnungsbereichs angeordnet sein. Auf diese Weise kann eine besonders kompakte Bauweise erreicht werden. Zudem muss die Form des Behälters gegenüber den bekannten Behältern nicht angepasst werden, da alle zusätzlichen Elemente im sonst nicht genutzten Griff "verstaut" werden können. Passend dazu ist der Permanent-Magnet am Deckel derart angeordnet, dass es bei korrekt auf dem Behälter aufgesetzten Deckel mit der Blattfeder in Kontakt treten kann. Also ist der Permanent-Magnet z. B. an einer Fläche des Deckels vorgesehen, die mit dem Rand des Behälters in Kontakt kommt, falls das Behälterkontaktelement d.h. die Blattfeder am Rand angeordnet ist.

Nach einer vorteilhaften Ausführungsvariante der Erfindung ist Identifikationselement ein RFID-Transponder und das Lese- und Kontrollmodul umfasst ein RFID-Lesegerät. Auf diese Weise kann die vor allem in der Logistik-Branche bekannte und gut beherrschte RFID-Technologie zur Identifikation des Behälters verwendet werden. RFID-Transponder können günstig hergestellt werden. Zudem haben sie ein geringes Gewicht und sind auch sehr zuverlässig. Durch die Möglichkeit, verschiedene Daten auf jedem RFID-Transponder abzuspeichern können auch verschiedene Behälter voneinander unterschieden werden. Dies ermöglicht insbesondere, dass für jeden Behälter spezifische Programme und Drehzahlen definiert und bei der Erkennung eines entsprechenden Codes durch das Lese- und Kontrollmodul angewendet werden. Hierzu ist es insbesondere vorteilhaft, wenn die Basis ein Speichermittel umfasst, in welchem Daten derart speicherbar sind, dass sie mit durch das Lese- und Kontrollmodul lesbaren Daten vergleichbar sind.

Bei einer Ausführungsform einer Vorrichtung zum Be- und/oder Verarbeiten von Nahrungsmitteln umfasst die Vorrichtung einen Behälter für die zu bearbeitenden Nahrungsmittel mit einem Deckel, sowie eine Basis, welche einen Antriebsmotor umfasst, und auf welche der Behälter aufsetzbar ist, in welcher der Deckel ein Anziehungselement als erstes Kontaktelement (Permanent-Magnet) und der Behälter ein Schwenkelement als zweites Kontaktelement (Blattfeder) umfassen, wobei das Schwenkelement durch das Anziehungselement derart anziehbar ist, dass ein im Behälter angeordneter Schaltkreis schliessbar ist, und in welcher der Behälter ein Identifikationselement mit darauf speicherbaren Daten und die Basis ein Leseund Kontrollmodul umfassen, wobei das Identifikationselement über den Stromkreis aktivierbar ist, und wobei die auf dem Identifikationselement speicherbaren Daten durch das Lese- und Kontrollmodul lesbar und der Antriebsmotor kontrollierbar sind.

Gemäss zwei vorteilhaften Ausführungsformen der Erfindung ist das Anziehungselement ein Permanent-Magnet und das Schwenkelement eine Blattfeder aus Metall. Permanent-Magnete zeichnen sich durch eine grosse Robustheit und niedrigen Preis aus. Zudem können sie relativ einfach in die Deckel aus Metall oder Kunststoff eingesetzt und dort festgehalten werden. In Kombination mit einer metallischen Blattfeder kann die Öffnung und Schliessung des Stromkreises besonders einfach, günstig aber dennoch zuverlässig realisiert werden.

An dieser Stelle muss nochmals erwähnt werden, dass sich die vorliegende Erfindung neben der erfindungsgemässen Vorrichtung zum Mischen und/oder Pürieren von Speisen auch auf ein entsprechendes Verfahren zum Kontrollieren dieser Vorrichtung bezieht.

Bei einem Verfahren zum Kontrollieren einer erfindungsgemässen Vorrichtung zum Be- und/oder Verarbeiten von Nahrungsmitteln wie oben beschrieben wird der Deckel derart auf dem Behälter angeordnet, dass ein Öffnungsbereich des Behälters zumindest überwiegend abgedeckt wird. Dabei kommen der Permanent-Magnet und die Blattfeder derart miteinander in Kontakt, dass der elektrische Schaltkreis geschlossen und das Identifikationselement aktiviert wird. Die auf dem Identifikationselement gespeicherten Daten können somit durch das Lese- und Kontrollmodul gelesen und die Einheit zur Be- und/oder Verarbeitung der Nahrungsmittel kann derart kontrolliert werden, dass die Vorrichtung in Betrieb genommen werden kann. Folgerichtig kann die Vorrichtung nicht in Betrieb genommen werden, wenn der Deckel nicht auf den Behälter aufgesetzt und der Schaltkreis geschlossen ist.

Falls der Deckel vom Behälter entfernt und der Öffnungsbereich zumindest überwiegend freigegeben wird, wird der Permanent-Magnet von der Blattfeder, wobei der Schaltkreis geöffnet und das Identifikationselement deaktiviert wird. Somit können die auf dem Identifikationselement gespeicherten Daten durch das Lese- und Kontrollmodul nicht gelesen werden, wodurch die Bearbeitungseinheit derart kontrolliert wird, dass die Vorrichtung nicht in Betrieb genommen werden kann.

Weiter ist es vorteilhaft, dass falls der Behälter von der Basis entfernt wird, die auf dem Identifikationselement gespeicherten Daten durch das Leseund Kontrollmodul nicht gelesen werden, so dass die Bearbeitungseinheit derart kontrolliert wird, dass die Vorrichtung nicht in Betrieb genommen werden kann.

Vorteilhaft können die auf dem Identifikationselement gespeicherten und vom Lese- und Kontrollmodul gelesenen Daten mit gespeicherten Daten verglichen werden, und bei keiner Übereinstimmung die Bearbeitungseinheit derart kontrolliert werden, dass die Vorrichtung nicht in Betrieb genommen werden kann.

Alternativ oder zusätzlich dazu können die auf dem Identifikationselement gespeicherten und vom Lese- und Kontrollmodul gelesenen Daten mit gespeicherten Daten verglichen werden, und die Bearbeitungseinheit derart kontrolliert werden, dass vorgespeicherte Programme und/oder Drehzahlen eines Antriebsmotors für die Bearbeitungseinheit ausgeführt werden.

Bei einer Vorrichtung mit einem Anziehungselement d.h. Permanent-Magnet und einem Schwenkelement d.h. Blattfeder als Kontaktelemente, wie oben beschrieben, wird bei dem erfindungsgemässen Verfahren zum Kontrollieren dieser Vorrichtung der Deckel auf dem Behälter angeordnet, das Schwenkelement durch das Anziehungselement angezogen und der elektrische Schaltkreis geschlossen, sodass das Identifikationselement aktiviert wird. Somit können die auf dem Identifikationselement gespeicherten Daten durch das Lese- und Kontrollmodul gelesen und der Antriebsmotor derart kontrolliert werden, dass die Vorrichtung in Betrieb genommen werden kann. In diesem Fall müssen die Kontaktelemente nicht durch einen direkten Kontakt, bei dem sich die Kontaktelemente berühren, zusammenwirken. Vielmehr ist es ausreichend, dass das erste Kontaktelement in ausreichender Nähe der Blattfeder positioniert wird, um ein Schliessen des Schaltkreises zu aktivieren, indem der Kontaktschalter des Schaltkreises geschlossen wird. Eine solche Funktionsweise ist z. B. von Reed-Kontakten bekannt. Die Kontaktelemente gemäss der Erfindung können in diesem Fall als einen Kontakt auslösende Elemente verstanden werden.

Falls der Deckel den Öffnungsbereich des Behälters zumindest überwiegend frei gibt kehrt, das Schwenkelement wieder in die Ausgangslage zurück, wodurch der elektrische Schaltkreis geöffnet und das Identifikationselement deaktiviert wird, sodass die Vorrichtung nicht in Betrieb genommen werden kann.

Wie oben erläutert, können die Kontaktelemente des Deckels und des Behälter bei verschiedenen Ausführungsformen der erfindungsgemässen Vorrichtung zum Be- und/oder Verarbeiten von Nahrungsmitteln an unterschiedlichen Stellen an Deckel und Behälter angebracht werden. Wesentlich ist dabei, dass nur bei einem korrekt auf der Behälteröffnung angeordnetem Deckel der elektrische Schaltkreis geschlossen ist und somit das Identifikationselement aktiviert ist. Wie oben dargelegt, ist umfasst der Schaltkreis vorteilhaft ein RFID-Element, welchen dann nur bei geschlossenem Behälter ein Identifikationssignal liefert.

### Kurze Beschreibung der Zeichnungen

Die Erfindung ist an Hand mehrerer Ausführungsformen dargestellt worden. Die einzelnen technischen Merkmale einer Ausführungsform können jedoch durchaus auch in Kombination mit einer anderen Ausführungsform mit den dargelegten Vorteilen verwendet werden. Die Beschreibung der erfindungsgemässen technischen Merkmale ist daher nicht auf die jeweilige Ausführungsform beschränkt.

Eine vorteilhafte Ausführungsform der Erfindung wird im Folgenden anhand der Zeichnungen dargestellt, die lediglich zur Erläuterung dienen und nicht einschränkend auszulegen sind. Aus den Zeichnungen offenbar werdende Merkmale der Erfindung sollen als zur Offenbarung der Erfindung gehörend betrachtet werden. In den Zeichnungen zeigen:
- Fig. 1: eine Frontalansicht einer erfindungsgemässen Vorrichtung zum Mischen und/oder Pürieren von Speisen,
- Fig. 2: einen vereinfachten Längsschnitt durch die Vorrichtung aus Figur 1 in einer betriebsbereiten Position,
- Fig. 2A: einen vergrösserten Ausschnitt aus Figur 2 mit des obersten Abschnitts des Griffs der Vorrichtung,
- Fig. 3: einen vereinfachten Längsschnitt durch die Vorrichtung aus Figur 1 in einer nicht betriebsbereiten Position,
- Fig. 3A: einen vergrösserten Ausschnitt aus Figur 3 mit des obersten Abschnitts des Griffs der Vorrichtung und
- Fig. 4: allgemeines Funktionsschema einer erfindungsgemässen Vorrichtung zum Be- und/oder Verarbeiten von Nahrungsmitteln.

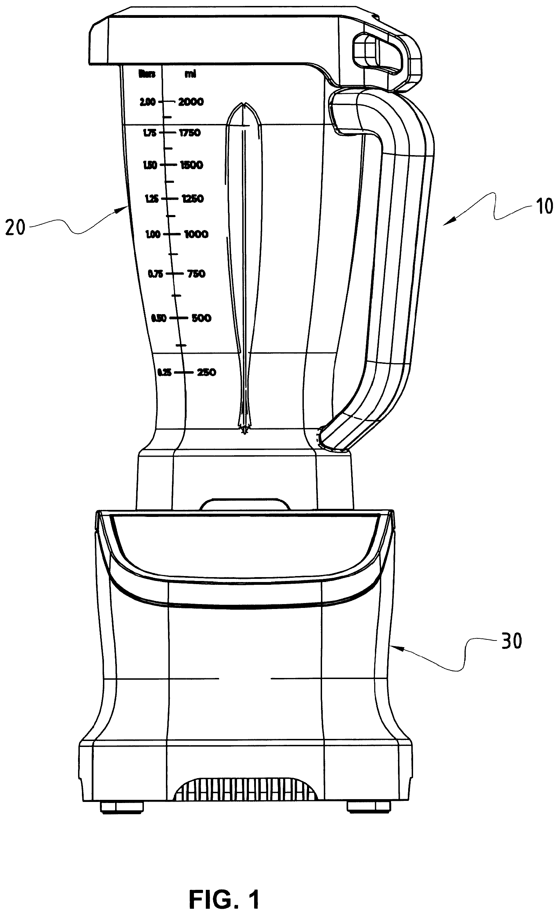

In Figur 1 ist ein Beispiel für eine Vorrichtung 10 zum Be- und/oder Verarbeiten von Nahrungsmitteln, insbesondere zum Mischen und/oder Pürieren von Speisen, gemäss der vorliegenden Erfindung illustriert. Diese Vorrichtung 10 umfasst, wie dies auch bei ähnlichen Vorrichtungen der Fall ist, eine Basis 30 und einen darauf aufgesetzten Behälter 20, in welchen die zu mischenden bzw. zu pürierenden Nahrungsmittel eingeführt werden, bevor die Vorrichtung 10 in Betrieb genommen wird. Die Vorrichtung 10 umfasst, im Wesentlichen an der Basis 30, Bedienungs- und/oder Anzeigeelemente (z.B. Schalter, Knöpfe, Displays, etc.), welche der Einfachheit halber nicht dargestellt sind.

An dieser Stelle soll angemerkt werden, dass der Begriff "Nahrungsmittel" nicht einschränkend ausgelegt werden soll. Mit einer erfindungsgemässen Vorrichtung können z. B. Früchte und Gemüse gemischt und/oder püriert werden, aber es ist selbstverständlich durchaus auch möglich, andere feste Lebensmittel wie zum Beispiel Fleisch oder Zerealien, oder Flüssigkeiten wie zum Beispiel Wasser, Essig oder Öl zu be- oder verarbeiten. Ausserdem kann die erfindungsgemässe Vorrichtung theoretisch ohne weiteres auch mit nicht essbaren Gegenständen verwendet werden, beispielsweise um Holz oder Kunststoff zu zerhacken. Es soll daher für die Zwecke dieser Anmeldung angenommen werden, dass alle diese und andere geeignete Gegenstände unter den allgemeinen Begriff "Nahrungsmittel" fallen.

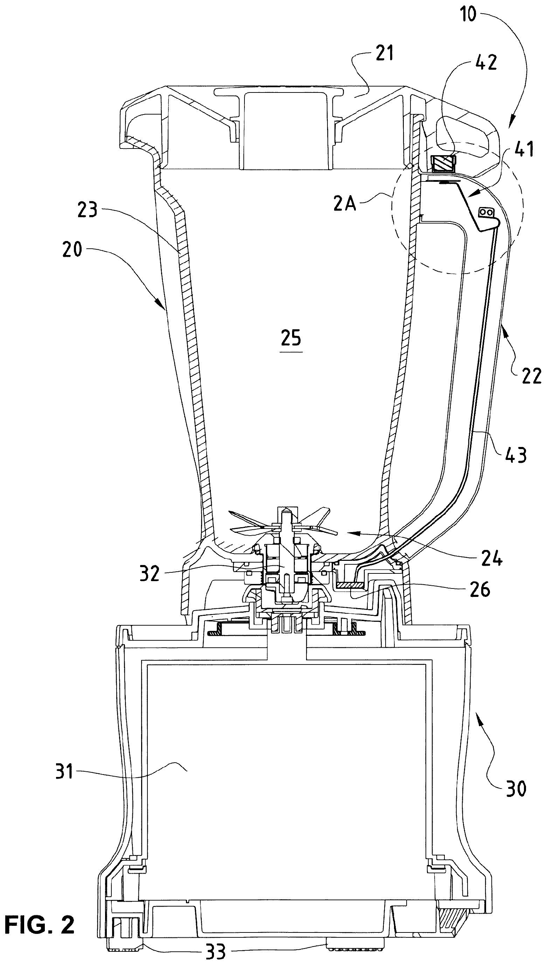

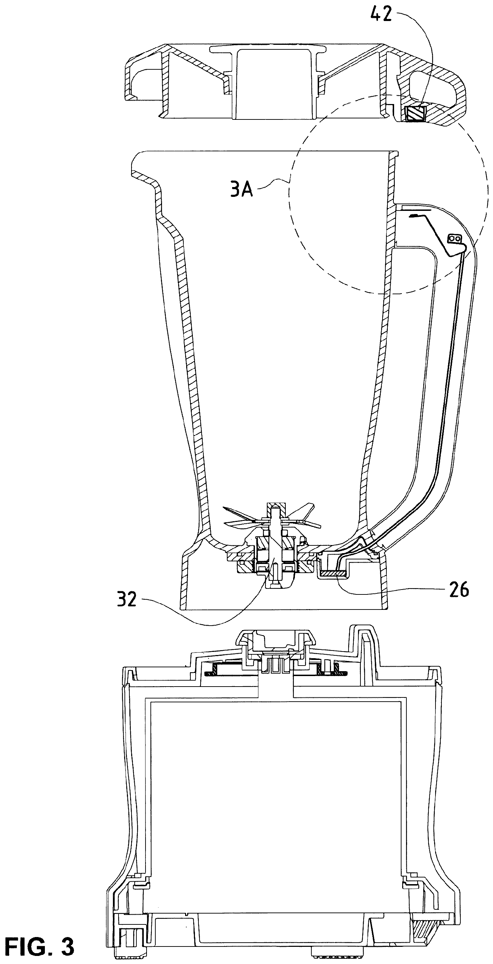

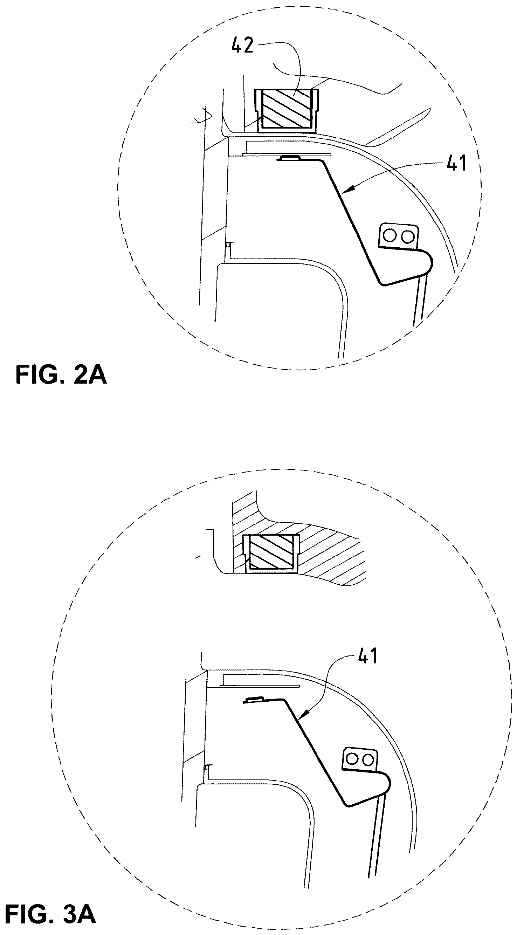

In Figuren 2 und 3 ist die erfindungsgemässe Vorrichtung 10aus Figur 1 jeweils in einem Längsschnitt dargestellt, in welchem die innere Struktur der Vorrichtung 10 besser sichtbar ist.

Der Behälter 20 besteht aus einer Wand 23, welche beispielsweise aus Kunststoff, Metall oder Glas hergestellt werden kann. Auf einen Öffnungsbereich am oberen Ende des Behälters 20 kann ein Deckel 21 aufgesetzt (wie in Figur 2) und von diesem wieder entfernt (wie in Figur 3) werden. Der Behälter 20 umfasst zudem einen Griff 22, an welchem der Behälter 20 durch einen Benutzer gehalten werden kann, beispielsweise um die pürierten Nahrungsmittel nach dem Betrieb aus dem Behälter 20 in ein Glass auszugiessen. Der Deckel 21 und der Griff 22 umfassen Kontaktelement, wie sie für die vorliegende Erfindung relevant sind und später detaillierter beschrieben werden.

Am unteren Ende des Behälters weist der Behälter einen Aufsetzbereich auf, mit dem er auf die Basis 30 aufgesetzt und an eine Bearbeitungseinheit gekoppelt werden kann. Im unteren Bereich eines Innenraums 25 des Behälters 20 befindet sich ein Messerstern 24 der Bearbeitungseinheit, welcher durch einen Antriebsmotor 31 (nur schematisch illustriert) über eine Kupplung 32 in Drehung versetzt werden kann. Die Basis 30, und somit die gesamte Vorrichtung 10, weisen einen oder mehrere eventuell höhenverstellbare Füsse 33 auf, mittels welcher diese auf einer Arbeitsunterlage positioniert werden können.

Somit stimmt der grundsätzliche Aufbau der erfindungsgemässen Vorrichtung 10 im Wesentlichen mit dem Aufbau von ähnlichen vorbekannten Vorrichtungen überein. Ausserdem stimmt auch die grundsätzliche Funktionsweise dieser erfindungsgemässen Vorrichtung 10 im Prinzip mit der Funktionsweise von ähnlichen vorbekannten Vorrichtungen überein, so dass diese hier nicht näher beschrieben wird.

Wichtig zu betonen ist an dieser Stelle, dass die Basis 30 der erfindungsgemässen Vorrichtung 10 zum Be- und/oder Verarbeiten von Nahrungsmitteln grundsätzlich auch mit verschiedenen Behältern 20 verwendet werden kann. Beispielsweise können Behälter 20 mit unterschiedlichem Volumen zur Verfügung gestellt werden. Ebenfalls sind Behälter 20 aus verschiedenen Materialien, oder auch Behälter 20 mit verschiedenen Messern für die Benutzung mit verschiedenen Speisen denkbar. In einem solchen Fall können auch mehrere Deckel 21 vorgesehen werden, welche jeweils mit einem entsprechenden Behälter 20 verwendet werden können. Es wäre aber auch möglich, einen einzigen Deckel 21 mit verschiedenen Behältern 20 zu benutzen.

Unabhängig von diesen verschiedenen Optionen ist das besondere an der erfindungsgemässen Vorrichtung 10 zum Be- und/oder Verarbeiten von Nahrungsmitteln, dass sie Einrichtungen zur Kontrolle der Betriebsbereitschaft der Vorrichtung aufweist, dank welchen die Verletzungsgefahr durch unwillentliches Berühren der rotierenden Messer auf eine einfache und zuverlässige Weise minimiert werden kann.

Zu diesem Zweck umfasst der Deckel 21 einen Permanent-Magneten in Form eines Anziehungselements 42, beispielsweise einen Permanent-Magneten 42. Dieser Permanent-Magnet ist so angeordnet, dass er bei korrekt aufgesetztem Deckel 21 in der Nähe des Griffs 22 des Behälters 20 befindet. Der Griff 22 des Behälters 20 umfasst seinerseits eine Blattfeder in Form eines Schwenkelements 41, beispielsweise eine metallene Blattfeder, und einen elektrischen Schaltkreis 43 (schematisch illustriert). Sobald nun der Deckel 21 korrekt auf den Behälter 20 aufgesetzt wird, wird die im oberen Abschnitt des Griffs 22, in der Nähe des Deckels 21 liegende Blattfeder 41 vom Permanent-Magneten 42 im Deckel 21 angezogen. Der Schaltkreis 43 im Griff 22 wird somit geschlossen, wie in Figuren 2 und 2A gut sichtbar ist. Wenn der Deckel 21 jedoch vom Behälter 20 weggenommen wird, kann die Blattfeder 41 nicht mehr vom Permanent-Magneten 42 angezogen werden und somit fällt diese Blattfeder 41 wieder in die Ausgangslage zurück, in welcher der Stromkreis 43 nicht mehr geschlossen ist. Diese Position der Blattfeder 41 ist in Figuren 3 und 3A dargestellt.

Neben dem Permanent-Magneten 42 im Deckel 21 und der Blattfeder 41 im Griff 22 des Behälters 20 umfasst der Behälter 20 auch ein Identifikationselement 26, beispielsweise einen RFID-Transponder. Zudem umfasst die Basis 30 der Vorrichtung 10 ein Lese- und Kontrollmodul (nicht illustriert), beispielsweise ein RFID-Lesegerät mit einer entsprechenden Steuerung des Antriebsmotors 21 der Bearbeitungseinheit. Es soll an dieser Stelle betont werden, dass die genaue Ausgestaltung dieses Lese- und Kontrollmoduls für einen Fachmann ohne weiteres nachvollziehbar ist, sowie dass es verschiedene Möglichkeiten gibt, dieses Modul zu implementieren. Insbesondere können die Funktionalität des Lesens der Daten aus dem Identifikationselement des Behälters 20 von der Kontrollfunktion des Antriebsmotors 21 durch zwei getrennte physische Elemente realisiert werden.

Die RFID-Technologie (vom Englischen "Radio Frequency Identification" bzw. Identifizierung mit Hilfe elektromagnetischer Wellen) ist eine Identifikationstechnologie, welche vor allem im Logistik-Bereich seit einiger Zeit eine wichtige Rolle spielt. Dabei können die auf einem so genannten RFID-Transponder gespeicherten Daten über eine drahtlose Funkverbindung von einem Lesegerät ausgelesen werden. Die RFID-Transponder umfassen dabei meistens keine eigene Energiequelle und erhalten die zur Datenübermittlung benötigte Energie ebenfalls drahtlos vom Lesegerät. Diese Energieübermittlung ist jedoch nur auf kurze Distanzen beschränkt, so dass die Datenübermittlung zu einem Lesegerät nur funktioniert, wenn sich der RFID-Transponder und das RFID-Lesegerät in der Nähe voneinander befinden. Die verschiedenen technischen Details über die RFID-Technologie sind einem Fachmann gut bekannt, können jedoch beispielsweise unter https://de.wikipedia.org/wiki/RFID nachgelesen werden, so dass sich eine detaillierte Beschreibung dieser Technologie erübrigt.

Nachdem wie oben beschrieben der Schaltkreis 43 im Griff 22 des Behälters 20 geschlossen wird, wird der RFID-Transponder 26 aktiviert. Wenn nun der Behälter 20 korrekt auf die Basis 30 aufgesetzt wird, empfängt die Antenne des RFID-Transponders 26 Energie vom Lese- und Kontrollmodul aus der Basis 30, wodurch Daten vom RFID-Transponder 26 an dieses Lese- und Kontrollmodul übermittelt werden können. Durch den vom RFID-Transponder 26 verwendeten Signal-Code kann das RFID-Lesegerät in der Basis 30 erkennen, ob einerseits der Deckel 21 richtig geschlossen ist, und zusätzlich ob andererseits der Behälter 20 korrekt auf der Basis 30 aufgesetzt ist. Es ist zudem möglich, die Identifizierung von verschiedenen Behältern 20 durch eine unterschiedliche Codierung des RFID-Transponders 26 zu erlauben. Ist also der Behälter 20 mit dem Deckel 21 korrekt auf der Basis 30 aufgesetzt, kann das Lese- und Kontrollmodul die Art des Behälters 20 und die korrekte Position erkennen. Dieses Lese- und Kontrollmodul in der Basis 30 kann also in diesem Fall den Antriebsmotor 31 der Bearbeitungseinheit "freigeben", so dass die Vorrichtung 10 durch den Benutzer in Betrieb genommen werden kann.

Wenn dann, bei einem auf der Basis 30 korrekt aufgesetzten Behälter 20 beispielsweise der Deckel 21 weggenommen wird, wird der Schaltkreis 43 im Griff 22 des Behälters 20 wie oben beschrieben unterbrochen. Der RFID-Transponder 26 wird folglich deaktiviert und das RFID-Lesegerät kann danach diese Deaktivierung erkennen. Dadurch kann die Freigabe des Antriebsmotors 31 durch das Lese- und Kontrollmodul wieder aufgehoben werden, wodurch die Vorrichtung 10 automatisch abgestellt werden kann. Entsprechendes passiert beim Entfernen des gesamten Behälters 20 von der Basis 30: In diesem Fall entfernt sich auch der RFID-Transponder 26 aus dem Lesebereich des RFID-Lesegeräts, was ebenfalls ein Abstellen des Betriebs der Vorrichtung 10 durch das Lese- und Kontrollmodul nach sich zieht.

Es wird nochmals darauf hingewiesen, dass die gezeigte, beispielhaft beschriebene Ausführungsvariante nur eine mögliche Realisierung der erfindungsgemässen Idee darstellt und keinesfalls als limitierend angesehen werden sollen. Der Fachmann wird verstehen, dass noch andere Implementierungen der Erfindung und weitere Elemente möglich sind, ohne dass die wesentlichen Merkmale der Erfindung vernachlässigt werden. So können, wie eingangs erwähnt, die Kontaktelemente an Deckel und Behälter an verschiedenen Stellen angeordnet werden. Insbesondere ist es nicht notwendig ein magnetisches Kontaktelement zu verwenden. Es ist ausreichend, wenn die Kontaktelemente bei aufgesetztem Deckel derart zusammenwirken, dass der Schaltkreis geschlossen ist. Weiter kann der RFID-Transponder 26 im Behälter 20 auch durch eine Energiequelle (beispielsweise im Griff 22) versorgt werden, wobei das Schliessen des Schaltkreises 43 automatisch eine aktive Aussendung von Daten aus diesem Transponder bewirkt, während diese Aussendung von Daten beim Öffnen des Schaltkreises 43 unterbrochen wird, was dann auch das Abstellen der Vorrichtung 10 nach sich zieht. Ausserdem ist es möglich, die RFID-Technologie durch andere drahtlose Identifikationstechnologien zu ersetzen, beispielsweise NFC (Near Field Communication), WiFi, Bluetooth, ZigBee, etc. Ferner kann die erfindungsgemässe Vorrichtung auch andere Bearbeitungseinheiten als einen Messerstern mit Antriebsmotor aufweisen.

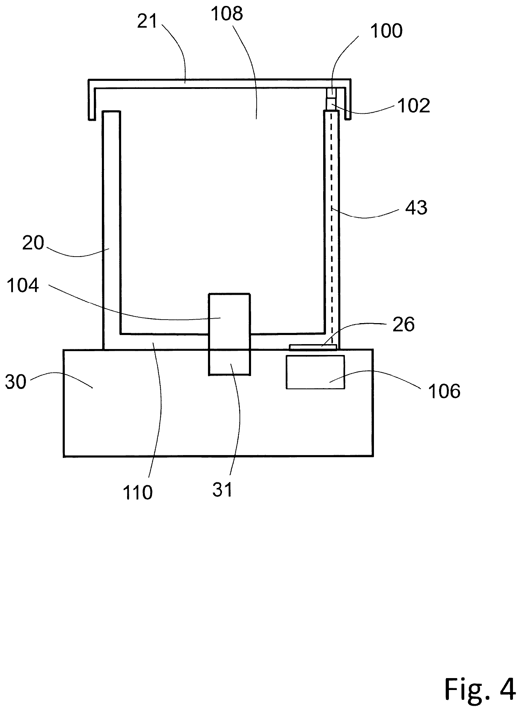

Die Erfindung soll daher anhand eines allgemeinen Funktionsschemas nach Figur 4 erläutert werden, das für Vorrichtungen mit unterschiedlichen Einheiten zur Be- und/oder Verarbeiten von Nahrungsmitteln gültig ist, wie etwa Mixer, Zerkleinerungsprozessoren, Kochprozessoren und viele mehr.

Wie in Figur 4 gezeigt umfasst der Aufbau einer Vorrichtung zum Beund/oder Verarbeiten von Nahrungsmitteln nach der Erfindung umfassend einen Behälter 20 zur Aufnahme von Nahrungsmitteln mit einem oberen Öffnungsbereich 108 und einem unteren Aufsatzbereich 110, einen Deckel 21, eine Basis 30 und eine Einheit zur Be- und/oder Verarbeitung der Nahrungsmittel mit einem Bearbeitungselement 104. Optional kann diese Bearbeitungseinheit auch einen Antriebmotor 31 umfassen, je nach dem welcher Art das Bearbeitungselement 104 ist. Der Behälter ist mit dem Aufsatzbereich 110 auf der Basis angeordnet. Bei einer Variante mit Antriebsmotor 31 koppelt in aufgesetztem Zustand das Bearbeitungselement 104 an den Antriebsmotor 31. Für die Erfindung ist es vorteilhaft, wenn der Behälter 20 von der Basis 30 abnehmbar ist, aber es ist nicht zwingend erforderlich.

Der Deckel 21 weist ein erstes Kontaktelement 100 und der Behälter 20 ein zweites Kontaktelement 102 auf. Wenn der Deckel 21 auf den Behälter aufgesetzt ist und den Öffnungsbereich 108 abdeckt, kommen das erste Kontaktelement 100 und das zweite Kontaktelement 102 in Kontakt. Dieser Kontakt schliesst einen elektrischen Schaltkreis 43, der am Behälter 20 angeordnet ist. In der schematischen Darstellung ist der Schaltkreis 43 als gestrichelte Linie gezeigt.

Weiter weist der Behälter 20 ein Identifikationselement 26 auf, auf dem z. B. Informationen zum Behälter oder zur Stellung des Deckels gespeichert sein können. Nach der Erfindung es jedoch ausreichend, dass das Identifikationselement 26 dazu dient zu erkennen, ob der Deckel 21 ordnungsgemäss auf dem Behälter 20 aufgebracht ist. Die Basis 30 weist ferner ein Lese- und Kontrollmodul 106 auf, welches das Identifikationselement 26 liest und die Bearbeitungseinheit kontrolliert.

Erfindungsgemäss ist das Identifikationselement 26 bei geschlossenem Schaltkreis 43 aktiviert, sodass die auf dem Identifikationselement vorhandenen Informationen durch das Lese- und Kontrollmodul 106 gelesen werden können und die Einheit zur Be- und/oder Verarbeitung entsprechend der Informationen kontrolliert werden. Sind keine Informationen aus dem Identifikationselement 26 auslesbar, weil der Schaltkreis 43 nicht geschlossen ist, wird die Vorrichtung derart kontrolliert, dass sie nicht in Betrieb genommen werden kann. Ist jedoch der Schaltkreis 43 geschlossen, sind die Informationen auslesbar und das Lese- und Kontrollmodul 106 kontrolliert die Vorrichtung derart, dass sie in Betrieb genommen werden kann.

## Patentansprüche

1. Vorrichtung (10) zum Be- und/oder Verarbeiten von Nahrungsmitteln umfassend:
- einen Behälter (20) zur Aufnahme der Nahrungsmittel mit einem Deckel (21),
- eine Basis (30), auf welcher der Behälter (20) angeordnet ist, und
- eine Einheit zur Be- und/oder Verarbeitung der Nahrungsmittel,
**dadurch gekennzeichnet,**
- **dass** der Deckel (21) einen Permanent-Magneten (42) und der Behälter (20) eine Blattfeder (41) umfassen, wobei der Permanent-Magnet (42) und die Blattfeder (41) derart zusammenwirken, dass die Blattfeder (41) durch den Permanent-Magneten (42) derart anziehbar ist, dass ein am Behälter (20) angeordneter elektrischer Schaltkreis (43) schliessbar ist, und
- **dass** der Behälter (20) ein Identifikationselement (26) mit darauf speicherbaren Daten und die Basis (30) ein Lese- und Kontrollmodul umfassen, wobei
- das Identifikationselement (26) bei geschlossenem Schaltkreis (43) aktiviert ist, sodass auf dem Identifikationselement (26) vorhandene Daten durch das Lese- und Kontrollmodul lesbar sind und die Einheit zur Be- und/oder Verarbeitung kontrollierbar ist

2. Vorrichtung nach Anspruch 1, **dadurch gekennzeichnet, dass** der elektrische Schaltkreis (43) von einem Öffnungsbereich des Behälters (20), der mit dem Deckel (21) abdeckbar ist, zu einem Aufsatzbereich des Behälters (20), mit dem der Behälter mit der Basis gekoppelt ist, verläuft, insbesondere, dass der elektrische Schaltkreis (43) durch einen Griff (22) des Behälters (20) angeordnet ist.

3. Vorrichtung nach einem der vorhergehenden Ansprüche, **dadurch gekennzeichnet, dass** die Blattfeder (41) in einem Griff (22) des Behälters (20) oder zumindest an einem Bereich eines Rands eines Öffnungsbereichs des Behälters (20) angeordnet ist.

4. Vorrichtung nach einem der vorhergehenden Ansprüche, **dadurch gekennzeichnet, dass** das Identifikationselement (26) ein RFID-Transponder ist.

5. Vorrichtung nach einem der vorhergehenden Ansprüche, **dadurch gekennzeichnet, dass** das Lese- und Kontrollmodul ein RFID-Lesegerät umfasst.

6. Vorrichtung nach einem der vorhergehenden Ansprüche, **dadurch gekennzeichnet, dass** die Basis (30) ein Speichermittel umfasst, in welchem Daten derart speicherbar sind, dass sie mit durch das Leseund Kontrollmodul lesbaren Daten vergleichbar sind.

7. Vorrichtung nach einem der vorhergehenden Ansprüche, **dadurch gekennzeichnet, dass** der Behälter (20) von der Basis (30) abnehmbar ist.

8. Vorrichtung nach einem der vorhergehenden Ansprüche, **dadurch gekennzeichnet, dass** die Einheit zur Be- und/oder Verarbeitung der Nahrungsmittel einen Antriebsmotor (31) zum rotierenden Antrieb eines Bearbeitungselements und/oder ein Temperierelement zum Temperieren der Nahrungsmittel umfasst.

9. Verfahren zum Kontrollieren einer Vorrichtung zum Be- und/oder Verarbeiten von Nahrungsmitteln gemäss einem der Ansprüche 1 bis 8,
**dadurch gekennzeichnet,**
- **dass** der Deckel (21) derart auf dem Behälter (20) angeordnet wird, dass ein Öffnungsbereich des Behälters (20) zumindest überwiegend abgedeckt wird,
- wobei der Permanent-Magnet (42) und die Blattfeder (41) derart in Kontakt kommen, dass der elektrische Schaltkreis (43) geschlossen und das Identifikationselement (26) aktiviert wird,
- wodurch die auf dem Identifikationselement (26) gespeicherten Daten durch das Lese- und Kontrollmodul gelesen und die Einheit zur Beund/oder Verarbeitung der Nahrungsmittel derart kontrolliert wird, dass die Vorrichtung (10) in Betrieb genommen werden kann.

10. Verfahren nach Anspruch 9, **dadurch gekennzeichnet, dass** falls der Deckel (21) den Öffnungsbereich des Behälters (20) zumindest überwiegend frei gibt, die Blattfeder (41) vom Permanent-Magneten (42) entfernt wird, wobei der elektrische Schaltkreis (43) geöffnet und das Identifikationselement (26) deaktiviert wird, wodurch die auf dem Identifikationselement (26) gespeicherten Daten durch das Lese- und Kontrollmodul nicht gelesen werden, wobei die Einheit zur Be- und/oder Verarbeitung der Nahrungsmittel derart kontrolliert wird, dass die Vorrichtung (10) nicht in Betrieb genommen werden kann.

11. Verfahren nach Anspruch 9 oder 10, **dadurch gekennzeichnet, dass** falls der Behälter (20) von der Basis (30) entfernt wird, die auf dem Identifikationselement (26) gespeicherten Daten durch das Lese- und Kontrollmodul nicht gelesen werden, so dass die Einheit zur Beund/oder Verarbeitung der Nahrungsmittel derart kontrolliert wird, dass die Vorrichtung (10) nicht in Betrieb genommen werden kann.

12. Verfahren nach einem der Ansprüche 9 bis 11, **dadurch gekennzeichnet, dass** die auf dem Identifikationselement (26) gespeicherten und vom Lese- und Kontrollmodul gelesenen Daten mit gespeicherten Daten verglichen werden, und bei keiner Übereinstimmung die Einheit zur Beund/oder Verarbeitung der Nahrungsmittel derart kontrolliert wird, dass die Vorrichtung (10) nicht in Betrieb genommen werden kann.

13. Verfahren nach einem der Ansprüche 9 bis 12, **dadurch gekennzeichnet, dass** die auf dem Identifikationselement (26) gespeicherten und vom Lese- und Kontrollmodul gelesenen Daten mit gespeicherten Daten verglichen werden, und die Einheit zur Be- und/oder Verarbeitung der Nahrungsmittel derart kontrolliert wird, dass vorgespeicherte Programme und/oder Drehzahlen ausgeführt werden.

14. Verfahren nach einem der Ansprüche 9 bis 13, **dadurch gekennzeichnet, dass** beim Anordnen des Deckels (21) auf den Behälter (20) ein Schwenkelement (41) durch das Anziehungselement (42) angezogen und der elektrische Schaltkreis (43) geschlossen wird, sodass das Identifikationselement (26) aktiviert wird.

15. Verfahren nach Anspruch 14, **dadurch gekennzeichnet, dass** falls der Deckel (21) den Öffnungsbereich des Behälters (20) zumindest überwiegend frei gibt, das Schwenkelement (41) wieder in die Ausgangslage zurückkehrt, wodurch der elektrische Schaltkreis (43) geöffnet und das Identifikationselement (26) deaktiviert wird, sodass die Vorrichtung (10) nicht in Betrieb genommen werden kann.

## Claims

1. Apparatus (10) for treating and/or processing food comprising:
- a vessel (20), for receiving food, with a lid (21),
- a base (30), onto which the vessel (20) is arranged, and
- a unit for treating and/or processing the food,
**characterized in that**
- the lid (21) comprises a permanent magnet (42) and the vessel (20) a leaf spring (41), whereby the permanent magnet (42) and the leaf spring (41) interact in such a way that the leaf spring (41) is attracted by the permanent magnet (42) in such a way that an electrical circuit (43) disposed on the vessel (20) is able to be closed, and
- the vessel (20) comprises an identification element (26) with data storable thereon and the base (30) comprises a reading and control module, whereby
- the identification element (26) is activated when the electrical circuit (43) is closed, so that data existing on the identification element (26) are readable by the reading and control module and the unit for treating and/or processing is controllable.

2. Apparatus according to claim 1, **characterized in that** the electrical circuit (43) extends from an opening portion of the vessel (20), which is able to be covered with the lid (21), to a support region of the vessel (20), by which the vessel is coupled to the base, in particular **in that** the electrical circuit (43) is arranged through a handle (22) of the vessel (20).

3. Apparatus according to one of the preceding claims, **characterized in that** the leaf spring (41) is arranged in a handle (22) of the vessel (20) or at least on an area of an edge of an opening portion of the vessel (20).

4. Apparatus according to one of the preceding claims, **characterized in that** the identification element (26) is an RFID transponder.

5. Apparatus according to one of the preceding claims, **characterized in that** the reading and control module comprises an RFID reading device.

6. Apparatus according to one of the preceding claims, **characterized in that** the base (30) comprises a storage means in which data are storable in such a way that they are comparable with data readable by the reading and control module.

7. Apparatus according to one of the preceding claims, **characterized in that** the vessel (20) is removable from the base (30).

8. Apparatus according to one of the preceding claims, **characterized in that** the unit for treating and/or processing food comprises a drive motor (31) for rotating drive of a processing element and/or a temperature-regulating element for temperature control of the food.

9. Method for controlling an apparatus for treating and/or processing food according to one of the claims 1 to 8,
**characterized in that**
- the lid (21) is arranged on the vessel (20) such that an opening portion of the vessel (20) is at least predominantly covered,
- whereby the permanent magnet (42) and the leaf spring (41) come into contact in such a way that the electrical circuit (43) is closed and the identification element (26) is activated,
- whereby the data stored on the identification element (26) are read by the reading and control module and the unit for treating and/or processing food is controlled such that the apparatus (10) is able to be put into operation.

10. Method according to claim 9, **characterized in that** if the cover (21) at least predominantly exposes the opening portion of the vessel (20), the leaf spring (41) is moved away from the permanent magnet (42), whereby the electrical circuit (43) is opened and the identification element (26) is deactivated, whereby the data stored on the identification element (26) are not read by the reading and control module, whereby the unit for treating and/or processing food is controlled such that the apparatus (10) is not able to be put into operation.

11. Method according to claim 9 or 10, **characterized in that** if the vessel (20) is removed from the base (30), the data stored on the identification element (26) are not read by the reading and control module, so that the unit for treating and/or processing food is controlled such that the apparatus (10) is not able to be put into operation.

12. Method according to one of the claims 9 to 11, **characterized in that** the data stored on the identification element (26) and read by the reading and control module are compared with stored data, and if there is no match, the unit for treating and/or processing food is controlled such that the apparatus (10) is not able to be put into operation.

13. Method according to one of the claims 9 to 12, **characterized in that** the data stored on the identification element (26) and read by the reading and control module are compared with stored data, and the unit for treating and/or processing food is controlled such that pre-recorded programs and/or rotational speeds are executed.

14. Method according to one of the claims 9 to 13, **characterized in that** when placing the lid (21) on the vessel (20), a swivelling element (41) is attracted by the attraction element (42) and the electrical circuit (43) is closed, so that the identification element (26) is activated.

15. Method according to claim 14, **characterized in that** if the lid (21) exposes the opening portion of the vessel (20) at least predominantly, the swivelling element (41) returns to the starting position, whereby the electrical circuit (43) is opened and the identification element (26) is deactivated, so that the apparatus (10) is not able to be put into operation.

## Revendications

1. Dispositif (10) pour le traitement et/ou la transformation de produits alimentaires, comprenant :
- un récipient (20) destiné à recevoir les produits alimentaires, présentant un couvercle (21),
- une base (30) sur laquelle le récipient est agencé et
- une unité pour le traitement et/ou la transformation des produits alimentaires,
**caractérisé**
- **en ce que** le couvercle (21) comprend un aimant permanent (42) et le récipient (20) comprend un ressort à lame (41), l'aimant permanent (42) et le ressort à lame (41) coopérant de manière telle que le ressort à lame (41) peut être attiré par l'aimant permanent (42) de manière telle qu'un circuit intégré électrique (43) agencé sur le récipient (20) peut être fermé et
- **en ce que** le récipient (20) comprend un élément d'identification (26) sur lequel des données peuvent être enregistrées et la base (30) comprend un module de lecture et de commande,
- l'élément d'identification (26) étant activé lorsque le circuit intégré (43) est fermé de telle sorte que des données présentes sur l'élément d'identification (26) peuvent être lues par le module de lecture et de commande et l'unité pour le traitement et/ou la transformation peut être commandée.

2. Dispositif selon la revendication 1, **caractérisé en ce que** le circuit intégré électrique (43) s'étend depuis une zone d'ouverture du récipient (20), qui peut être recouverte par le couvercle (21), vers une zone d'adaptateur du récipient (20), par laquelle le récipient est accouplé à la base, en particulier **en ce que** le circuit intégré électrique (43) est agencé à travers une poignée (22) du récipient (20).

3. Dispositif selon l'une quelconque des revendications précédentes, **caractérisé en ce que** le ressort à lame (41) est agencé dans une poignée (22) du récipient (20) ou au moins au niveau d'une zone d'un bord d'une zone d'ouverture du récipient (20).

4. Dispositif selon l'une quelconque des revendications précédentes, **caractérisé en ce que** l'élément d'identification (26) est un transpondeur RFID (identifiant par radiofréquence).

5. Dispositif selon l'une quelconque des revendications précédentes, **caractérisé en ce que** le module de lecture et de commande comprend un module de lecture RFID.

6. Dispositif selon l'une quelconque des revendications précédentes, **caractérisé en ce que** la base (30) comprend un moyen de mémoire dans lequel des données peuvent être enregistrées de manière telle qu'elles peuvent être comparées à des données pouvant être lues par le module de lecture et de commande.

7. Dispositif selon l'une quelconque des revendications précédentes, **caractérisé en ce que** le récipient (20) peut être enlevé de la base (30).

8. Dispositif selon l'une quelconque des revendications précédentes, **caractérisé en ce que** l'unité pour le traitement et/ou la transformation des produits alimentaires comprend un moteur d'entraînement (31) pour l'entraînement en rotation d'un élément de traitement et/ou un élément de thermorégulation pour la thermorégulation des produits alimentaires.

9. Procédé pour la commande d'un dispositif pour le traitement et/ou la transformation de produits alimentaires selon l'une quelconque des revendications 1 à 8,
**caractérisé**
- **en ce que** le couvercle (21) est agencé sur le récipient (20) de manière telle qu'une zone d'ouverture du récipient (20) est au moins principalement recouverte,
- l'aimant permanent (42) et le ressort à lame (41) entrant en contact de manière telle que le circuit intégré électrique (43) est fermé et l'élément d'identification (26) est activé,
- suite à quoi les données enregistrées sur l'élément d'identification (26) sont lues par le module de lecture et de commande et l'unité pour le traitement et/ou la transformation des produits alimentaires est commandée de manière telle que le dispositif (10) peut être mis en service.

10. Dispositif selon la revendication 9, **caractérisé en ce que**, si le couvercle (21) libère au moins principalement la zone d'ouverture du récipient (20), le ressort à lame (41) est éloigné de l'aimant permanent (42), le circuit intégré électrique (43) étant ouvert et l'élément d'identification (26) étant désactivé, suite à quoi les données enregistrées sur l'élément d'identification (26) ne sont pas lues par le module de lecture et de commande, l'unité pour le traitement et/ou la transformation des produits alimentaires étant commandée de manière telle que le dispositif (10) ne peut pas être mis en service.

11. Procédé selon la revendication 9 ou 10, **caractérisée en ce que**, si le récipient (20) est éloigné de la base (30), les données enregistrées sur l'élément d'identification (26) ne sont pas lues par le module de lecture et de commande de telle sorte que l'unité pour le traitement et/ou la transformation des produits alimentaires est commandée de manière telle que le dispositif (10) ne peut pas être mis en service.

12. Procédé selon l'une quelconque des revendications 9 à 11, **caractérisé en ce que** les données enregistrées sur l'élément d'identification (26) et lues par le module de lecture et de commande sont comparées à des données enregistrées et dans le cadre d'une absence de concordance, l'unité pour le traitement et/ou la transformation des produits alimentaires est commandée de manière telle que le dispositif (10) ne peut pas et mis en service.

13. Procédé selon l'une quelconque des revendications 9 à 12, **caractérisé en ce que** les données enregistrées sur l'élément d'identification (26) et lues par le module de lecture et de commande sont comparées à des données enregistrées et l'unité pour le traitement et/ou la transformation des produits alimentaires est commandée de manière telle que des programmes et/ou des vitesses de rotation préenregistré(e)s sont mis(es) en œuvre.

14. Procédé selon l'une quelconque des revendications 9 à 13, **caractérisé en ce que** lors de l'agencement du couvercle (21) sur le récipient (20), un élément pivotant (41) est attiré par l'élément de traction (42) et le circuit intégré électrique (43) est fermé de manière telle que l'élément d'identification (26) est activé.

15. Procédé selon la revendication 14, **caractérisé en ce que**, si le couvercle (21) libère au moins principalement la zone d'ouverture du récipient (20), l'élément pivotant (41) retourne de nouveau dans la position de départ, suite à quoi le circuit intégré électrique (43) est ouvert et l'élément d'identification (26) est désactivé, de telle sorte que le dispositif (10) ne peut pas être mis en service.
